# EUROPÄISCHE PATENTANMELDUNG

(11) **EP 3 915 707 A1**
(43) Veröffentlichungstag der Anmeldung: **01.12.2021**
(21) Anmeldenummer: 20177122.7
(22) Anmeldetag: 28.05.2020
(51) Int. Cl.: B23K 7/00, B23K 7/10, B23K 9/013, B23K 9/32, B23K 10/00, B23K 15/02, B23K 15/08, B23K 26/08, B23K 26/38, B23K 31/00, B23K 37/02, B23K 37/04, B23K 101/18

(54) **VERFAHREN ZUR HERSTELLUNG VON WERKSTÜCKTEILEN AUS EINEM PLATTENFÖRMIGEN WERKSTÜCK SOWIE DATENBEARBEITUNGSPROGRAMM UND BEARBEITUNGSMASCHINE ZU DEREN HERSTELLUNG**

(71) Anmelder: TRUMPF Werkzeugmaschinen GmbH + Co. KG, 71254 Ditzingen (DE)
(72) Erfinder: Bunz, Andreas, 70771 Leinfelden-Echterdingen (DE); Wolf, Dennis, 71277 Rutesheim (DE); Raichle, Florian, 71522 Backnang (DE); Schönhardt, Guido, 71254 Ditzingen (DE); Rauscher, Steffen, 73265 Dettingen unter Teck (DE)
(74) Vertreter: Mammel und Maser

(57) **Zusammenfassung**

Die Erfindung betrifft ein Verfahren zur Herstellung von Werkstückteilen (14) aus einem plattenförmigen Werkstück (12) in einer Bearbeitungsmaschine, insbesondere Laserbearbeitungsmaschine sowie Datenbearbeitungsprogramm und Bearbeitungsmaschine zu deren Herstellung, bei dem das plattenförmige Werkstück (12) auf eine Werkstückauflage (14) positioniert und durch Klemmeinrichtungen (20, 21, 22) zur Werkstückauflage (14) gehalten wird, bei dem mit einem Prozessstrahl mehrere Werkstückteile (14) aus dem plattenförmigen Werkstück (12) geschnitten werden, bei dem der Prozessstrahl mit einem Bearbeitungskopf relativ zur Werkstückauflage (14) verfahren wird und/oder das plattenförmige Werkstück (12) durch die Klemmeinrichtungen (20, 21, 22) relativ zur Werkstückauflage (14) bewegt wird, wobei ein Schneidprozess zum Abarbeiten des plattenförmigen Werkstücks (12) für die Herstellung der Werkstückteile (14) zumindest einmal durch einen Entspannungsschritt für das plattenförmige Werkstück (12) unterbrochen wird und bei dem Entspannungsschritt zumindest eine Klemmeinrichtung (20, 21, 22) zum Entspannen des plattenförmigen Werkstücks (12) gelöst wird und nach dem Entspannen des plattenförmigen Werkstücks (12) und vor der Fortführung des Schneidprozesses die zumindest eine Klemmeinrichtung (20, 21, 22) geschlossen wird.

## Beschreibung

Die Erfindung betrifft ein Verfahren zur Herstellung von Werkstückteilen aus einem plattenförmigen Werkstück in einer Bearbeitungsmaschine sowie ein Datenverarbeitungsprogramm für eine Maschinensteuerung einer Bearbeitungsmaschine als auch eine Bearbeitungsmaschine zum Herstellen von Werkstückteilen aus einem plattenförmigen Werkstück.

Aus der WO 2015/091347 A ist eine Bearbeitungsmaschine, insbesondere Laserschneidmaschine, bekannt. Diese Bearbeitungsmaschine umfasst eine Werkstückauflage sowie mehrere Spannpratzen zum Greifen eines auf der Werkstückauflage positionierten plattenförmigen Werkstücks. Des Weiteren ist eine Strahlquelle zur Erzeugung eines Prozessstrahles vorgesehen. Der Prozessstrahl wird mittels eines Bearbeitungskopfes auf das plattenförmige Werkstück gerichtet, um Werkstückteile aus dem plattenförmigen Werkstück zu schneiden. Bevorzugt wird ein Laserstrahl zur Herstellung der Werkstückteile eingesetzt. Bei dieser Bearbeitungsmaschine ist vorgesehen, dass das plattenförmige Werkstück auf der Werkstückauflage entlang einer X-Achse verfahrbar ist und der Bearbeitungskopf oberhalb der Werkstückauflage entlang einer Y-Achse zur Werkstückauflage verfahrbar ist.

Aus der EP 2 008 736 A1 ist eine weitere Bearbeitungsmaschine zur Herstellung von Werkstückteilen zum Schneiden und/oder Stanzen aus dem plattenförmigen Werkstück bekannt. Bei dieser Bearbeitungsmaschine ist ein abweichendes Maschinenkonzept vorgesehen. Der Bearbeitungskopf zur Ausgabe des Prozessstrahles ist stillstehend und das plattenförmige Werkstück wird durch die Klemmeinrichtung in X- und/oder Y-Richtung entlang der Werkstückauflage bewegt.

Alternativ ist auch ein Maschinenkonzept bekannt, bei dem das plattenförmige Werkstück ruhend auf der Werkstückauflage gehalten ist und der Bearbeitungskopf relativ dazu entlang dazu in einer X- und Y-Achse oberhalb der Werkstückauflage verfahrbar ist.

Bei einer Abarbeitung des plattenförmigen Werkstücks zur Herstellung der Werkstückteile mit einem Prozessstrahl, insbesondere Laserstrahl, kann es aufgrund des Wärmeeintrags des Schneidprozesses zu Verspannungen im plattenförmigen Werkstück kommen. Dies kann zur Folge haben, dass das plattenförmige Werkstück sich wellt. Dies kann wiederum dazu führen, dass das zu schneidende Werkstückteil während des Schneidprozess schlagartig nach oben oder unten schnappt, sodass es zu einem sogenannten Schnittabriss kommt. Dies bedeutet, dass das Werkstückteil nicht vollständig vom plattenförmigen Werkstück beziehungsweise dem Restgitter getrennt wird und nicht mehr vom plattenförmigen Werkstück entnommen werden kann. Auch ohne einen solchen Schnittabriss kann es durch Verspannungen des plattenförmigen Werkstückes dazu kommen, dass das geschnittene Werkstückteil nicht aus dem plattenförmigen Werkstück entnehmbar ist.

Aus der DE 10 2015 217 015 B1 ist eine Laserschneidvorrichtung zur Herstellung einer Blechplatine mittels eines Laserstrahls bekannt. Der Laserschneidvorrichtung wird ein Blech von einem Coil zugeführt, wobei dieses Blech mittels einer Reckeinrichtung spannungsfrei verzogen wird. Darauffolgend wird dieses gereckte Blech, bei dem eine Zugspannung aufgebracht wird, so dass die Streckgrenze eines das Blech bildenden Metalls überschritten ist, der Laserschneidvorrichtung zugeführt, um die Blechplatine zu schneiden. Somit wird ein gerecktes Blech dem Schneidprozess zugeführt. Während dem Schneidprozess wird das Blech mit höchstens einer der Klemmeinrichtungen gehalten oder beim Schneiden des Bleches sogar die klemmende Verbindung der Klemmeinrichtungen gelöst.

Für die maßhaltige Herstellung von Werkstückteilen aus plattenförmigen Werkstücken ist jedoch erforderlich, dass eine Klemmung des plattenförmigen Werkstücks gegeben ist, so dass ein Verdrehen des plattenförmigen Werkstücks in der Auflageebene auf einer Werkstückauflage der Bearbeitungsmaschine verhindert ist.

Der Erfindung liegt die Aufgabe zugrunde, ein Verfahren zur Herstellung von Werkstückteilen aus einem plattenförmigen Werkstück sowie ein Datenverarbeitungsprogramm und eine Bearbeitungsmaschine vorzuschlagen, um die durch Wärmeeintrag in das plattenförmige Werkstück erzeugten Verspannungen abzubauen.

Diese Aufgabe wird durch ein Verfahren zum Herstellen von Werkstückteilen aus einem plattenförmigen Werkstück gelöst, bei dem ein Schneidprozess zum Abarbeiten des plattenförmigen Werkstücks für die Herstellung der Werkstückteile zumindest einmal durch einen Entspannungsschritt unterbrochen wird und bei dem während des Entspannungsschrittes zumindest eine Klemmeinrichtung zum Entspannen des plattenförmigen Werkstücks gelöst wird und nach dem Entspannen des plattenförmigen Werkstücks und vor der Fortführung des Schneidprozesses die zumindest eine gelöste Klemmeinrichtung wieder geschlossen wird. Dieses Verfahren ermöglicht, dass die Produktivität der Bearbeitungsmaschine nur in einem geringen Maße reduziert wird, und zwar durch die kurzzeitige Unterbrechung des Schneidprozesses zur Durchführung des zumindest einen Entspannungsschrittes. Dadurch wird jedoch ermöglicht, dass ein Verspannen des plattenförmigen Werkstücks durch den Wärmeeintrag des Schneidstrahls, insbesondere eines Laserstrahls, der sich vor allem negativ auf die Schnittgenauigkeit und/oder Prozesssicherheit auswirkt, reduziert oder eliminiert werden kann. Dadurch kann auch eine hohe Maßgenauigkeit bei der Herstellung der Werkstückteile erzielt werden. Zudem wurde festgestellt, dass beim Schneiden von Werkstückteilen, insbesondere größeren Werkstückteilen, ein Schnittabriss vermieden werden kann.

Bevorzugt ist vorgesehen, dass die Anzahl der Entspannungsschritte während des Schneidprozesses zum Abarbeiten des plattenförmigen Werkstücks in Abhängigkeit von der Zahl der aus dem plattenförmigen Werkstück herzustellenden Werkstückteile, der Materialstärke des plattenförmigen Werkstücks, der Größe der Werkstückteile und/oder der Laserleistung für den Prozessstrahl angesteuert wird. Dadurch kann eine Optimierung für die Produktivität der Bearbeitungsmaschine unter Berücksichtigung dieser Parameter erfolgen.

Vorteilhafterweise wird der Schneidprozess nach einem vollständigen Schneiden eines Werkstückteils und vor dem Beginn des nächsten Schneidschrittes zum Schneiden des nachfolgenden Werkstückteils unterbrochen. Der Entspannungsschritt wird also zwischen zwei aufeinanderfolgenden Schneidschritten durchgeführt. Dadurch kann wiederum eine hohe Maßhaltigkeit der geschnittenen Werkstückteile erzielt werden.

Bei der Durchführung des Entspannungsschrittes ist bevorzugt vorgesehen, dass das plattenförmige Werkstück, welches entlang einer Seitenkante durch mehrere Klemmeinrichtungen gehalten wird, zum Entspannen eines Teilbereichs des plattenförmigen Werkstücks die Klemmeinrichtungen von außen nach innen nacheinander gelöst werden, wobei zumindest zwei von den mehreren Klemmeinrichtungen geschlossen bleiben, die das plattenförmige Werkstück fixiert halten und darauffolgend nach dem Entspannen des Teilbereichs des plattenförmigen Werkstücks die Klemmeinrichtung von innen nach außen wieder geschlossen werden. Darauffolgend kann dieser Vorgang beginnend von der gegenüberliegenden Seite des plattenförmigen Werkstücks zum Entspannen des weiteren Teilbereichs des plattenförmigen Werkstücks wiederholt werden. Somit kann von jeder Stirnseite des plattenförmigen Werkstücks aus ein Entspannen ermöglicht sein. Gleichzeitig wird das plattenförmige Werkstück während des Entspannungsschrittes immer mit mindestens zwei Klemmeinrichtungen gehalten. Dies führt zu einer hohen Maßhaltigkeit, da sich dadurch das plattenförmige Werkstück weder verschieben noch relativ zu den Klemmeinrichtungen verdrehen kann.

Sofern das plattenförmige Werkstück durch beispielsweise drei Klemmeinrichtungen entlang einer Seitenkante gehalten wird, kann zum Entspannen des plattenförmigen Werkstücks die eine äußere Klemmeinrichtung geöffnet und geschlossen werden, sowie darauffolgend die gegenüberliegende äußere Klemmeinrichtung geöffnet und geschlossen werden. Somit bleibt die mittlere Klemmeinrichtung dauerhaft in einer Klemmposition, wobei abwechselnd zusätzlich jeweils eine der beiden äußeren Klemmeinrichtungen ebenso das Werkstück fixiert halten.

Gemäß einer weiteren bevorzugten Ausführungsform des Verfahrens ist vorgesehen, dass das plattenförmige Werkstück entlang einer Seitenkante durch vier oder mehrere Klemmeinrichtungen gehalten wird und zum Entspannen des plattenförmigen Werkstücks zunächst an einer Hälfte des plattenförmigen Werkstücks die äußere Klemmeinrichtung und darauffolgend zumindest eine benachbart dazu innenliegende Klemmeinrichtung geöffnet und nachfolgend in umgekehrter Weise wieder geschlossen wird, während die beiden weiteren Klemmeinrichtungen oder die Klemmeinrichtungen an der anderen Hälfte des plattenförmigen Werkstücks geschlossen bleiben. Anschließend wird dieser Vorgang an der gegenüberliegenden Hälfte des Werkstücks wiederholt. Dadurch wird das Öffnen der Klemmeinrichtungen von außen nach innen und das Schließen der Klemmeinrichtungen von innen nach außen angesteuert. Eine optimale Entspannung kann erzielt werden.

Die Anzahl der Entspannungsschritte kann in Abhängigkeit der Materialstärke angesteuert werden. Vorteilhafterweise ist die Anzahl der Entspannungsschritte beim Abarbeiten des plattenförmigen Werkstückes von 4 mm oder weniger größer als bei einer Materialstärke des plattenförmigen Materials, welches größer als 4 mm ist. Bei einer größeren Materialstärke des plattenförmigen Materials kommt es bei einem Wärmeeintrag zu einer geringeren Verformung. Dadurch kann die Anzahl der Entspannungsschritte reduziert werden.

Des Weiteren ist bevorzugt vorgesehen, dass bei Werkstückteilen, die eine Kantenlänge von größer als 500 mm aufweisen und/oder eine längliche Form aufweisen, bei der das Verhältnis der Kantenlänge des umschließenden Recktecks zueinander größer als 2:1 ist, vor dem Schneidschritt zur Herstellung des Werkstückteils ein Entspannungsschritt durchgeführt wird. Alternativ oder zusätzlich kann auch nach dem Schneidschritt zur Herstellung des Werkstückteils ein Entspannungsschritt durchgeführt werden. Vor dem Schneiden eines länglichen Werkstücks ist es vorteilhaft, Verspannungen im Werkstück abzubauen, da sich eine Verformung des Werkstücks beim Schneiden länglicher Werkstückteile besonders negativ auswirkt. Durch die verlängerte Bearbeitungsdauer zur Herstellung solcher länglicher Werkstückteile erfolgt außerdem ein verstärkter Wärmeeintrag, der zu Verspannungen führen kann, die es durch einen Entspannungsschritt abzubauen gilt.

Eine weitere vorteilhafterweise Ausführungsform des Verfahrens sieht vor, dass die herzustellenden Werkstückteile aus dem plattenförmigen Werkstück in Reihen und Spalten geschachtelt werden und dass bei dem Schneidprozess von Werkstückteilen, die eine benachbarte Reihe zu den Klemmeinrichtungen bilden, zumindest ein Entspannungsschritt nach dem Fertigschneiden von wenigstens zwei Werkstückteilen angesteuert wird.

Eine weitere bevorzugte Ausgestaltung des Verfahrens sieht vor, dass bei einer Fixierung des plattenförmigen Werkstücks durch die Klemmeinrichtung entlang einer Seitenkante der Schneidprozess von Werkstückteilen, die in einer von den Klemmeinrichtungen abgewandten Hälfte, vorzugsweise einem abgewandten Drittel des plattenförmigen Werkstücks, liegen, ohne einen Entspannungsschritt durchgeführt wird. Es hat sich herausgestellt, dass in diesen Bereichen entfernt zu den Klemmeinrichtungen eine hohe Schnittgenauigkeit und Prozesssicherheit auch ohne Entspannungsschritte ermöglicht wird, wohingegen bei Werkstücken, näher an den Klemmeinrichtungen liegen, ein oder mehrere Entspannungsschritte erforderlich sind.

Die der Erfindung zugrundeliegende Aufgabe wird des Weiteren durch ein Datenverarbeitungsprogramm für eine Maschinensteuerung einer Bearbeitungsmaschine gelöst, welche die Maschine zur Durchführung des Verfahrens nach einem der vorbeschriebenen Ausführungsformen ansteuert.

Dadurch kann die Abarbeitung des plattenförmigen Werkstücks zur Herstellung von mehreren Werkstückteilen selbständig von der Bearbeitungsmaschine durchgeführt werden. Ergänzend oder alternativ kann auch nach dem Schneiden der im Datenverarbeitungsprogramm festgelegten Zahl der Werkstückteile eine Aufforderung an den Bediener erfolgt, den Entspannungsschritt durchzuführen. Der Bediener kann dabei entscheiden, ob der Entspannungsschritt durchgeführt werden soll oder zu diesem Zeitpunkt noch nicht notwendig ist. Es kann auch ergänzend ein Prozessschritt im Datenverarbeitungsprogramm vorgesehen sein, dass der Bediener in der Maschinensteuerung die Anzahl der Werkstückteile einstellen kann, nach welchen ein Entspannungsschritt durchgeführt wird, insbesondere, wenn es sich beim Schneiden um sehr komplexe Werkstückteile handelt, bei denen die durch das Datenverarbeitungsprogramm vorgesehene Zahl der Entspannungsschritte nicht ausreichend erscheint.

Die der Erfindung zugrundeliegende Aufgabe wird des Weiteren durch eine Bearbeitungsmaschine zur Herstellung von Werkstückteilen aus einem plattenförmigen Material, insbesondere einer Laserschneidmaschine, gelöst, bei dem die Werkstückteile aus dem plattenförmigen Werkstück gemäß einem der vorbeschriebenen Verfahrensschritte herstellbar sind.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsmaschine zur Herstellung von Werkstückteilen aus einem plattenförmigen Werkstück,
Figur 2 eine schematische Ansicht auf ein plattenförmiges Werkstück mit Klemmeinrichtungen zur Darlegung eines Entspannungsschrittes, und
Figur 3 eine schematische Ansicht auf das plattenförmige Werkstück mit einer alternativen Anzahl von Klemmeinrichtungen zur Darstellung eines Entspannungsschrittes.

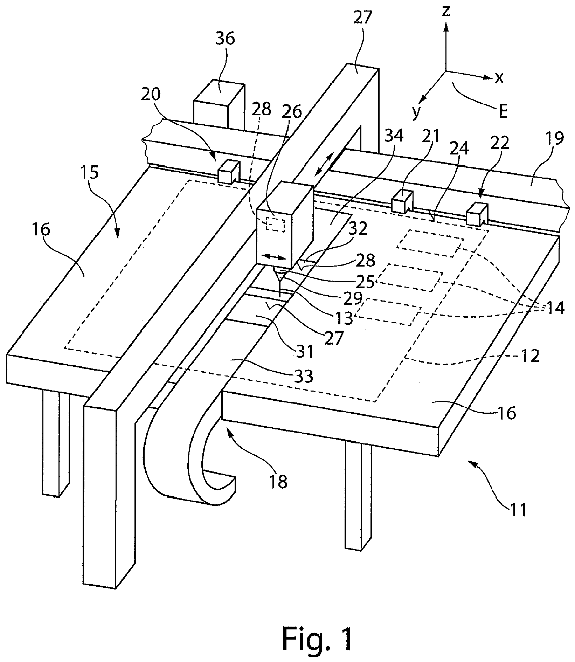

In Figur 1 ist beispielhaft eine Bearbeitungsmaschine 11 zur Herstellung von Werkstückteilen 14 aus einem plattenförmigen Werkstück 12 dargestellt. Die Herstellung der Werkstückteile 14 aus dem plattenförmigen Werkstück 12 erfolgt durch eine trennende Bearbeitung, insbesondere mittels eines Prozessstrahles 13. Die Bearbeitungsmaschine kann als eine Laserbearbeitungsmaschine zum Laserschneiden von Werkstückteilen 14 mit einem Laserstrahl als Prozessstrahl 13 ausgebildet sein. Zur schneidenden Bearbeitung der Werkstückteile 14 kann der Prozessstrahl 13 auch ein Plasmastrahl sein.

Das plattenförmige Werkstück 12 liegt bei der Bearbeitung auf einer Werkstückauflage 15 auf, welche beispielsweise aus zwei benachbart zueinander angeordneten Werkstückauflageflächen 16 gebildet ist, die unter Bildung eines Spaltes 18 beabstandet sind. Die Werkstückauflage 15 umfasst eine Auflageebene E, welche einer XY-Ebene des in Figur 1 dargestellten XYZ-Koordinatensystems entspricht.

Mittels einer Handhabungseinrichtung 19, welche einen nicht näher dargestellten Antrieb umfasst, werden mehrere Klemmeinrichtungen 20, 21, 22, 23 angesteuert. Durch die Klemmeinrichtungen 20, 21, 22, 23 kann das plattenförmige Werkstück 12 auf der Werkstückauflage 15 in einer Bewegungsrichtung X verschoben und an eine vorgegebene Bearbeitungsposition bewegt werden. Die Klemmeinrichtungen 20, 21, 22, 23 sind bevorzugt als Spannpratzen, oder Klemmpratzen ausgebildet, die entlang einer Seitenkante 24 des plattenförmigen Werkstücks 12 angreifen. Alternativ kann auch vorgesehen sein, dass zur Bewegung oder Unterstützung der Bewegung des plattenförmigen Werkstücks 12 in X-Richtung die Werkstückaufnahme 15 selbst als Bewegungseinrichtung ausgestaltet ist, beispielsweise in Form eines oder mehrerer umlaufender Förderbänder, wie dies in der DE 10 2011 051 170 A1 der Anmelderin beschrieben ist.

Der zwischen den Werkstückauflageflächen 16 der Werkstückauflage 15 liegende Spalt 18 erstreckt sich in Y-Richtung vorzugsweise über den gesamten Verfahrweg eines Bearbeitungskopfes 25, der den Prozessstrahl 30 auf das plattenförmige Werkstück 12 ausrichtet und fokussiert. Der Bearbeitungskopf 25 ist mittels eines als Bewegungseinrichtung dienenden angetriebenen Schlittens 26 an einem feststehenden Portal 27 geführt. Der Bearbeitungskopf 25 ist oberhalb des Spaltes 18 in Y-Richtung verfahrbar angesteuert. Der Bearbeitungskopf 25 kann im dargestellten Beispiel innerhalb des Spaltes 18 zusätzlich auch in X-Richtung gesteuert verfahrbar sein. Hierzu kann der Schlitten 26 mit einer zusätzlichen Bewegungseinrichtung 28, beispielsweise in Form eines Linearantriebs, in X-Richtung gesteuert verfahren werden. Mit Hilfe der aufeinander aufbauenden Bewegungseinrichtungen 26, 28 kann der Bearbeitungskopf 25 sowohl in X-Richtung als auch in Y-Richtung in einer gewünschten Schneidposition innerhalb des Spaltes 18 positioniert werden. Gegebenenfalls kann der Bearbeitungskopf 25 auch entlang einer dritten Bewegungsrichtung (Z-Richtung) verschoben werden, um den Abstand zwischen einer Bearbeitungsdüse 29 des Bearbeitungskopfes 25 und der Werkstückoberfläche einzustellen.

Innerhalb des Spaltes 18 sind zwei Unterstützungsschlitten 31, 32 angeordnet, die sich jeweils über die Breite des Spaltes 18 erstrecken und im Spalt in Y-Richtung gesteuert sowie unabhängig voneinander verfahrbar sind. Am jeweiligen zum Prozessstrahl 13 entfernten Ende der Unterstützungsschlitten 31, 32 ist jeweils ein Überdeckungselement 33, 34 vorgesehen, durch welches der Spalt 18 geschlossen ist. Der Prozessstrahl 13 wird durch eine Strahlquelle 36, insbesondere einer Laserquelle, erzeugt und mittels einer nicht näher dargestellten Strahlführung dem Bearbeitungskopf 25 zugeführt und über diesen ausgegeben.

Bei der Abarbeitung des durch die Klemmeinrichtung 20, 21, 22, 23 gehaltenen plattenförmigen Werkstücks 12, das auf der Werkstückauflage 15 aufliegt, wird zur Vermeidung von im plattenförmigen Werkstück 12 auftretenden Verspannungen beispielsweise folgende Bearbeitungen durchgeführt:

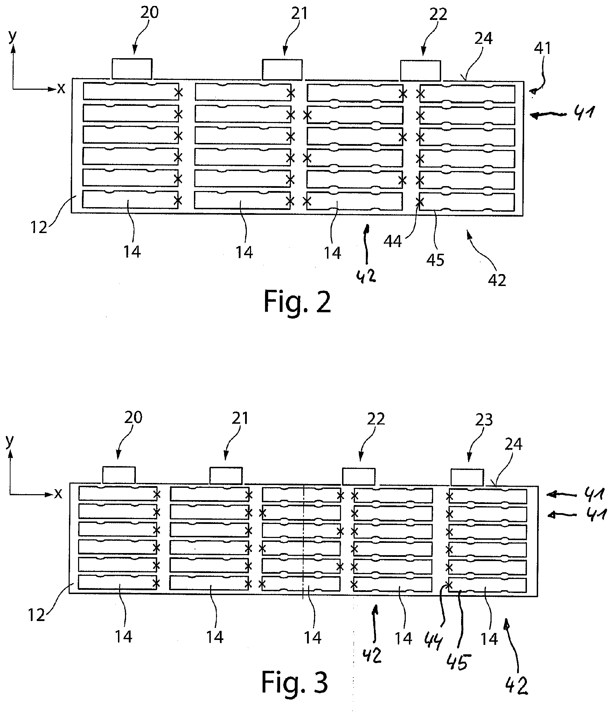

Eine erste Ausführungsform des Verfahrens zur Herstellung von Werkstückteilen 14 aus dem plattenförmigen Werkstück 12 durch trennende Bearbeitung wird anhand der Figur 2 näher beschrieben.

Das plattenförmige Werkstück 12 weist eine länglich rechteckige Geometrie auf. Entlang einer Seitenkante 24, insbesondere der längeren Seitenkante des plattenförmigen Werkstücks 12, ist das plattenförmige Werkstück 12 beispielsweise durch drei Klemmeinrichtungen 20, 21, 22 gehalten. Das Angreifen von drei Klemmeinrichtungen 20, 21, 22 erfolgt bei kleineren plattenförmigen Werkstücken 12, beispielsweise bis zu einer Länge der Seitenkante 24 von 2.400 mm. Die Werkstückteile 14 sind beispielsweise in sechs Reihen 41 und vier Spalten 42 geschachtelt. Die Werkstückteile 14 werden ausgehend von einem Startpunkt 44 im Uhrzeigersinn oder im Gegenuhrzeigersinn geschnitten und ein Schneidspalt 45 mit dem Prozessstrahl 13 eingebracht, bis der Prozessstrahl 13 wieder bis zum Startpunkt 44 gelangt. Im Startpunkt 44 kann ein Mikrojoint ausgebildet sein, der das Werkstückteil 14 mit dem plattenförmigen Werkstück 12 verbindet. Auch kann eine vollständige Trennung des Werkstücks 14 vom plattenförmigen Werkstück 12 erfolgen.

Bei einem Schneidprozess zur Abarbeitung des plattenförmigen Werkstücks 12 werden ein oder mehrere Werkstückteile 14 mit dem Prozessstrahl 13 geschnitten. Zum Abbau der durch den Wärmeeintrag in das plattenförmige Werkstück 12 erzeugten Verspannungen wird zumindest einmal während dem Schneidprozess zur Abarbeitung des Werkstücks zwischen zwei Schneidschritten zum Schneiden von Werkstückteilen ein Entspannungsschritt durchgeführt. Der Ablauf eines solchen Entspannungsschrittes wird nachfolgend beschrieben.

Beispielsweise kann zunächst die erste, bzw. äußere Klemmeinrichtung 20 geöffnet werden, damit sich der der Klemmeinrichtung 20 zugeordnete Teilbereich des plattenförmigen Werkstücks 12 entspannen kann. Die beiden weiteren Klemmeinrichtungen 21, 22 bleiben zur Aufrechterhaltung der Lage und Orientierung des plattenförmigen Werkstücks 12 geschlossen. Nach dem Entspannen des einen Teilbereichs des plattenförmigen Werkstücks 12, der der ersten Klemmeinrichtung 20 zugeordnet ist, wird diese Klemmeinrichtung 20 geschlossen. Darauffolgend wird die der gegenüberliegenden Seite des plattenförmigen Werkstücks 12 vorgesehene dritte, bzw. äußere Klemmeinrichtung 22 geöffnet. Nach dem Entspannen des der dritten Klemmeinrichtung 22 zugeordneten Teilbereiches des plattenförmigen Werkstücks 12 wird die Klemmeinrichtung 22 wieder geschlossen. Der Entspannungsschritt bei beispielsweise drei Klemmeinrichtungen 20, 21, 22 für das plattenförmige Werkstück 12 ist danach abgeschlossen. Bei diesem Entspannungsschritt bleibt die mittlere Klemmeinrichtung 21 dauerhaft geschlossen.

Ein solcher Entspannungsschritt kann beispielsweise dann durchgeführt werden, wenn ein oder mehrere Werkstückteile 14 in der ersten und/ oder in der zweiten und/oder in der dritten Reihe 41 abgearbeitet sind. Auch kann ein Entspannungsschritt dann erfolgen, wenn die Werkstückteile 14 nach Spalten 42 hergestellt werden. Bei der Herstellung von Werkstückteilen 14 entlang einer Spalte 42 wird mit zunehmender Nähe der Werkstückteile 14 zur Klemmeinrichtung 20, 21, 22 zunehmend die Anzahl der Entspannungsschritte erhöht.

In Figur 3 ist eine schematische Ansicht auf ein plattenförmiges Werkstück 12 dargestellt, welches eine Länge der Seitenkante 24 von beispielsweise größer 2.400 mm aufweist. In diesem Fall greifen wenigstens vier Klemmeinrichtungen 20, 21, 22, 23 an der Seitenkante 24 an. Bei einer solchen Größe des plattenförmigen Werkstücks 12 erfolgt der Entspannungsschritt beispielsweise wie folgt:

Die Klemmeinrichtungen 20, 21, 22, 23 spannen das plattenförmige Werkstück 12 während der Herstellung des zumindest einen Werkstückteils 14. Nach dem vollständigen Schneiden des einen Werkstückteils 14 wird der Entspannungsschritt eingeleitet, bevor das zumindest eine nächste Werkstückteil 14 geschnitten wird. Zunächst wird eine äußerste Klemmeinrichtung, beispielsweise die Klemmeinrichtung 23, geöffnet. Darauffolgend wird die benachbarte innenliegende Klemmeinrichtung 22 geöffnet. Dadurch kann der die Klemmeinrichtungen 22, 23 zugeordnete Teilbereich des plattenförmigen Werkstücks 12 entspannt werden. Anschließend werden die geöffneten Klemmeinrichtungen 22, 23 von innen nach außen geschlossen, also zunächst die innenliegende Klemmeinrichtung 22 und darauffolgend die äußere Klemmeinrichtung 23. Dadurch ist beispielsweise eine rechte Hälfte des plattenförmigen Werkstücks 12 entspannt. Die Klemmeinrichtungen 20, 21 bleiben während der ersten Phase des vorbeschriebenen Entspannungsschrittes geschlossen.

Darauffolgend wird dieselbe Abfolge für die linke Hälfte des plattenförmigen Werkstücks 12 durchgeführt, d.h., es wird zunächst die Klemmeinrichtung 20 geöffnet und danach die Klemmeinrichtung 21, während die Klemmeinrichtungen 22 und 23 geschlossen bleiben. Anschließend wird Klemmeinrichtung 21 und schließlich Klemmeinrichtung 20 wieder geschlossen. Danach ist eine zweite Phase des Entspannungsschrittes und somit der gesamte Entspannungsschritt abgeschlossen.

Eine analoge Vorgehensweise zur Durchführung des Entspannungsschrittes ist auch dann gegeben, wenn beispielsweise fünf, sechs oder mehr Klemmeinrichtungen an einer Seitenkante 24 des plattenförmigen Werkstücks 12 angreifen. Das aufeinanderfolgende Öffnen der Klemmeinrichtungen vom äußeren Rand zur Mitte hin erfolgt in dem Umfang, dass zumindest zwei Klemmeinrichtungen während des Entspannungsschrittes immer geschlossen gehalten sind.

## Patentansprüche

1. Verfahren zur Herstellung von Werkstückteilen (14) aus einem plattenförmigen Werkstück (12) in einer Bearbeitungsmaschine (11), insbesondere Laserbearbeitungsmaschine,
- bei dem das plattenförmige Werkstück (12) auf eine Werkstückauflage (14) positioniert und durch Klemmeinrichtungen (20, 21, 22, 23) zur Werkstückauflage (14) gehalten wird,
- bei dem mit einem Prozessstrahl (13) mehrere Werkstückteile (14) aus dem plattenförmigen Werkstück (12) geschnitten werden,
- bei dem der Prozessstrahl (13) mit einem Bearbeitungskopf (25) relativ zur Werkstückauflage (14) verfahren wird und/oder das plattenförmige Werkstück (12) durch die Klemmeinrichtungen (20, 21, 22, 23) relativ zur Werkstückauflage (14) bewegt wird,
**dadurch gekennzeichnet,**
- **dass** ein Schneidprozess zum Abarbeiten des plattenförmigen Werkstücks (12) für die Herstellung der Werkstückteile (14) zumindest einmal durch einen Entspannungsschritt für das plattenförmige Werkstück (12) unterbrochen wird, und
- **dass** bei dem Entspannungsschritt zumindest eine Klemmeinrichtung (20, 21, 22, 23) zum Entspannen des plattenförmigen Werkstücks (12) gelöst wird und nach dem Entspannen des plattenförmigen Werkstücks (12) und vor der Fortführung des Schneidprozesses die zumindest eine Klemmeinrichtung (20, 21, 22, 23) geschlossen wird.

2. Verfahren nach Anspruch 1, **dadurch gekennzeichnet, dass** die Anzahl der Entspannungsschritte während des Schneidprozesses zur Abarbeitung des plattenförmigen Werkstücks (12) in Abhängigkeit von der Zahl der aus dem plattenförmigen Werkstück (12) herzustellenden Werkstückteile (14), der Materialstärke des plattenförmigen Werkstücks (12), der Größe der Werkstückteile (14) und/oder Leistung des Prozessstrahles (13) angesteuert wird.

3. Verfahren nach Anspruch 1 oder 2, **dadurch gekennzeichnet, dass** der Schneidprozess nach einem Schneidschritt zum vollständigen Schneiden eines Werkstückteils (14) und vor dem Beginn des nächsten Schneidschrittes zum Schneiden eines nachfolgenden Werkstückteils (14) für den Entspannungsschritt unterbrochen wird.

4. Verfahren nach einem der vorhergehenden Ansprüche, **dadurch gekennzeichnet, dass** das plattenförmige Werkstück (12) entlang einer Seitenkante (24) durch mehrere Klemmeinrichtungen (20, 21, 22, 23) gehalten wird und zum Entspannen eines Teilbereichs des plattenförmigen Werkstücks (12) die Klemmeinrichtungen (20, 21, 22, 23) entlang der Seitenkante (24) von außen nach innen nacheinander gelöst werden, wobei zumindest zwei von den mehreren Klemmeinrichtungen (20, 21, 22, 23) geschlossen bleiben und das plattenförmige Werkstück (12) fixiert gehalten wird, und darauffolgend nach dem Entspannen des Teilbereichs des plattenförmigen Werkstücks (12) die geöffneten Klemmeinrichtungen (20, 21, 22, 23) von innen nach außen wieder geschlossen werden.

5. Verfahren nach einem der vorhergehenden Ansprüche, **dadurch gekennzeichnet, dass** das plattenförmige Werkstück (12) entlang einer Seitenkante (24) durch drei Klemmeinrichtungen (20, 21, 22) gehalten wird und zum Entspannen des plattenförmigen Werkstücks (12) zunächst die eine äußere Klemmeinrichtung (20; 22) geöffnet und geschlossen wird und darauffolgend die gegenüberliegende äußere Klemmeinrichtung (22; 20) geöffnet und geschlossen wird.

6. Verfahren nach einem der Ansprüche 1 bis 4, **dadurch gekennzeichnet, dass** das plattenförmige Werkstück (12) entlang der Seitenkante (24) durch vier oder mehrere Klemmeinrichtungen (20, 21,22, 23) gehalten wird und zum Entspannen des plattenförmigen Werkstücks (12) zunächst eine äußere Klemmeinrichtung (23) in einer Hälfte des Werkstücks (12) und darauffolgend zumindest eine benachbart dazu innenliegende Klemmeinrichtung (22) geöffnet wird, wobei die beiden weiteren Klemmeinrichtungen (20, 21) oder die Klemmeinrichtungen von der anderen Hälfte des plattenförmigen Werkstückes, die den geöffneten Klemmeinrichtungen (22, 23) gegenüber liegen, geschlossen bleiben, und dass darauffolgend zunächst die innenliegende Klemmeinrichtung (22) und anschließend die weiter außen liegende Klemmeinrichtung (23) geschlossen werden und dass dieser Vorgang auf der gegenüberliegenden Seite des plattenförmigen Werkstücks (12) wiederholt wird.

7. Verfahren nach einem der vorhergehenden Ansprüche, **dadurch gekennzeichnet, dass** die Anzahl der Entspannungsschritte bei einer Materialstärke des plattenförmigen Werkstücks (12) von 4 mm oder weniger größer als bei einer Materialstärke des plattenförmigen Werkstücks (12) von 4 mm oder mehr ist.

8. Verfahren nach einem der vorhergehenden Ansprüche, **dadurch gekennzeichnet, dass** vor und/oder nach dem Schneidvorgang eines Werkstückteils (14), das eine Kantenlänge von größer als 500 mm aufweist und/
oder eine längliche Form aufweist, bei der das Verhältnis der Kantenlängen des umschließenden Rechtecks zueinander größer als 2:1 ist, ein Entspannungsschritt durchgeführt wird.

9. Verfahren nach einem der vorhergehenden Ansprüche, **dadurch gekennzeichnet, dass** die herzustellenden Werkstückteile (14) aus dem plattenförmigen Werkstück (12) in Reihen (41) und Spalten (42) geschachtelt werden und dass beim Schneidprozess von Werkstückteilen (14), die eine benachbarte Reihe zu den Klemmeinrichtungen (20, 21, 22, 23) bilden, zumindest ein Entspannungsschritt nach dem Fertigschneiden von wenigstens zwei Werkstückteilen (14) angesteuert wird.

10. Verfahren nach einem der vorhergehenden Ansprüche, **dadurch gekennzeichnet, dass** das plattenförmige Werkstück (12) entlang der Seitenkante (24) von Klemmeinrichtungen (20, 21, 22, 23) gehalten wird und dass der Schneidprozess von Werkstückteilen (14), die in einer von den Klemmeinrichtungen (20, 21, 22, 23) abgewandten Hälfte, insbesondere einem von den Klemmeinrichtungen (20, 21, 22, 23) abgewandten Drittel des plattenförmigen Werkstücks (12) liegen, frei von einem Entspannungsschritt durchgeführt wird.

11. Datenverarbeitungsprogramm für eine Maschinensteuerung einer Bearbeitungsmaschine, insbesondere Laserschneidmaschine, mit einer Werkstückauflage (14), mit Klemmeinrichtungen (20, 21, 22, 23) zum Greifen eines auf der Werkstückauflage (14) positionierten plattenförmigen Werkstücks (12) und mit einer Strahlquelle (36) zur Erzeugung eines Prozessstrahles (13), der über einen Bearbeitungskopf (25) auf das plattenförmige Werkstück (12) gerichtet wird, **dadurch gekennzeichnet, dass** durch das Datenverarbeitungsprogramm die Maschine zur Durchführung des Verfahrens nach einem der Ansprüche 1 bis 10 ansteuerbar ist.

12. Bearbeitungsmaschine zur Herstellung von Werkstückteilen (14) aus einem plattenförmigen Werkstück (12) mit einer Werkstückauflage (14), mit Klemmeinrichtungen (20, 21, 22, 23) zum Greifen eines auf der Werkstückauflage (14) positionierten plattenförmigen Werkstücks (12) und mit einer Strahlquelle (36) zur Erzeugung eines Prozessstrahls (13), der über einem Bearbeitungskopf (25) auf das plattenförmige Werkstück (12) gerichtet wird, **dadurch gekennzeichnet, dass** die Werkstückteile (14) aus dem plattenförmigen Werkstück (12) gemäß einem Verfahren nach einem der Ansprüche 1 bis 10 herstellbar sind.
